# EUROPÄISCHE PATENTSCHRIFT

(11) **EP 3 478 996 B1**
(45) Veröffentlichungstag und Bekanntmachung des Hinweises auf die Patenterteilung: **15.07.2020**
(21) Anmeldenummer: 17729066.5
(22) Anmeldetag: 01.06.2017
(51) Int. Cl.: F16K 31/383

(54) **VENTIL ZUM VERSCHLIESSEN UND ÖFFNEN EINES LEITUNGSSYSTEMS**
VALVE FOR CLOSING AND OPENING A LINE SYSTEM
SOUPAPE DE FERMETURE ET D'OUVERTURE D'UN SYSTÈME DE CONDUITES

(30) Priorität: 29.06.2016 DE 102016111937
(43) Veröffentlichungstag der Anmeldung: 08.05.2019
(73) Patentinhaber: Kendrion (Villingen) GmbH, 78048 Villingen-Schwenningen (DE)
(72) Erfinder: OHNMACHT, Martin, 78737 Fluorn-Winzeln (DE); MAIWALD, Wolfram, 78052 Obereschach (DE); BÜRK, Wolfgang, 78054 Villingen-Schwenningen (DE); BARTH, Stefan, 78166 Donaueschingen (DE)
(74) Vertreter: Westphal, Mussgnug & Partner Patentanwälte mbB
(86) Internationale Anmeldenummer: PCT/EP2017/063336
(87) Internationale Veröffentlichungsnummer: WO 2018/001677

(56) Entgegenhaltungen:
- JP-A- H02 275 185
- US-A- 2 426 900
- US-A- 3 972 345
- US-A1- 2009 178 811

## Beschreibung

Die vorliegende Erfindung betrifft ein Ventil zum Verschließen und Öffnen eines Leitungssystems.

Ventile weisen im Allgemeinen einen ortsfesten Ventilsitz auf, mit welchem das Leitungssystem dadurch geschlossen und geöffnet werden kann, dass ein bewegbares Schließelement mit dem Ventilsitz zusammenwirkt. Derartige Leitungssysteme umfassen eine Zuführleitung zum Zuführen eines Fluids zum Ventilsitz und einer Abführleitung zum Abführen des Fluids vom Ventilsitz, wobei das Fluid in der Zuführleitung unter einem Versorgungsdruck und in der Abführleitung unter einem Nutzdruck steht. Einige Anwendungen machen es erforderlich, dass das Ventil geschlossen ist, solange der Versorgungsdruck unterhalb eines bestimmten Schwellenwertes liegt und das Ventil öffnet, sobald der Versorgungsdruck den Schwellenwert überschreitet. Derartige Ventile sind beispielsweise in der US 3 972 345 A, US 2009/178 811 A1, der JP H02 275 185 A und der US 2 426 900 A offenbart.

Grundsätzlich kann diese Eigenschaft mithilfe von Stelleinrichtungen umgesetzt werden, welche das Schließelement dann entsprechend bewegen, wenn der Schwellenwert über- oder unterschritten wird. Beispielsweise können hierzu elektromagnetische Ventile eingesetzt werden. Allerdings ist es hierbei notwendig, einen Drucksensor vorzusehen, welcher mit einer Steuereinheit kommuniziert, die wiederum die Stelleinrichtung entsprechend aktiviert. Neben den Kosten, welche diese Komponenten verursachen, dem Verkabelungsaufwand und dem benötigten Bauraum ist an derartigen elektromagnetischen Ventilen besonders nachteilig, dass ihre Funktionsfähigkeit von einer geeigneten Stromversorgung abhängt. Die Stromversorgung ist aber nicht immer gegeben, insbesondere in elektrisch autonomen Systemen wie Fahrzeugen. Zudem macht sich der mit der Aktivierung der elektromagnetischen Ventile einhergehende Stromverbrauch negativ auf den Kraftstoffverbrauch des betreffenden, mit einem Verbrennungsmotor betriebenen Fahrzeugs bemerkbar. Bei Elektrofahrzeugen reduziert sich aufgrund des erhöhten Stromverbrauchs die Reichweite.

Um diesen Nachteilen zu begegnen, werden fluidgesteuerte Ventile verwendet. Derartige Ventile umfassen ein Rückstellelement, welches das Schließelement mit einer bestimmten Rückstellkraft gegen den Ventilsitz drückt. Solange der Versorgungsdruck des Fluids unter dem Schwellenwert liegt, bleibt das Ventil geschlossen, so dass es sich um ein sogenanntes "normally closed" Ventil handelt. Das Ventil ist dabei so ausgestaltet, dass aufgrund des Versorgungsdrucks eine Fluidkraft auf das Schließelement aufgebracht wird, welche der Rückstellkraft entgegenwirkt. Steigt der Versorgungsdruck über den Schwellenwert, so übersteigt die Fluidkraft die Rückstellkraft, wodurch das Schließelement vom Ventilsitz weg bewegt und das Ventil geöffnet wird.

Um die Rückstellelemente möglichst klein auszuführen und damit Bauraum zu sparen, weisen einige Ventile einen Druckraum auf, welcher vom Ventilsitz gesehen hinter dem Schließelement angeordnet ist. Der Druckraum ist mit einem Fluid gefüllt, welches unter einem bestimmten Druck steht. Der Druck bewirkt eine Schließkraft, welche in dieselbe Richtung wirkt wie die Rückstellkraft des Rückstellelements, wodurch das Rückstellelement beim Drücken des Schließelements gegen den Ventilsitz unterstützt wird. Im Folgenden wird daher der Druck des Fluids im Druckraum auch als Schließdruck bezeichnet. In vielen Fällen ist der Druckraum fluidisch mit der Zuführleitung verbunden, so dass der Schließdruck genauso groß ist wie der Versorgungsdruck. Mit steigendem Versorgungsdruck steigt auch der Schließdruck, was zur Folge hat, dass das Schließelement nur relativ langsam vom Ventilsitz weg bewegt wird und folglich der Drosselquerschnitt zwischen dem Ventil und dem Schließelement, also die vom Fluid beim Strömen von der Zuführleitung in die Abführleitung zu durchquerende Strömungsquerschnittsfläche, mit steigendem Versorgungsdruck nur relativ langsam steigt. Das Schließelement und der Ventilsitz wirken daher als Drossel, so dass der Versorgungsdruck beim Durchströmen des Drosselquerschnitts auf den Nutzdruck gedrosselt wird. Die Drosselung ist umso stärker, je kleiner der Drosselquerschnitt ist. Aufgrund des sich langsam vom Ventilsitz weg bewegenden Schließelements wird über einen relativ großen Druckbereich der Versorgungdruck relativ stark auf den Nutzdruck gedrosselt, was insofern nachteilig ist, als dass für viele Anwendungen ein hoher Nutzdruck erwünscht ist.

Aufgabe einer Ausführungsform der vorliegenden Erfindung ist es daher, das fluidgesteuerte Ventil der eingangs beschriebenen Art derart weiterzuentwickeln, dass der Versorgungsdruck im Vergleich zu bekannten fluidgesteuerten Ventilen beim und nach dem Öffnen des Ventils weniger stark gedrosselt wird und folglich ein höherer Nutzdruck vorliegt. Mit anderen Worten soll das Öffnungsverhalten entsprechend verbessert werden, so dass bei einem gegebenen Versorgungsdruck im Vergleich zu bekannten fluidgesteuerten Ventilen ein größerer Drosselquerschnitt freigegeben und damit der Druckabfall über das Ventil reduziert wird.

Diese Aufgabe wird mit den in den Ansprüchen 1, 12 und 13 angegebenen Merkmalen gelöst. Vorteilhafte Ausführungsformen sind Gegenstand der Unteransprüche.

Eine Ausführungsform der Erfindung betrifft einen Ventilkörper aus Metall oder Kunststoff, der einen Ventilsitz bildet, ein Leitungssystem mit einer Zuführleitung zum Zuführen eines Fluids zum Ventilsitz und einer Abführleitung zum Abführen des Fluids vom Ventilsitz, wobei das Fluid in der Zuführleitung unter einem Versorgungsdruck und in der Abführleitung unter einem Nutzdruck steht, ein Schließelement, welches zum Verschließen und Öffnen des Leitungssystems mit dem Ventilsitz zusammenwirkt, wobei das Schließelement zwischen dem Ventilsitz und dem Schließelement einen Drosselquerschnitt freigibt, ein Rückstellelement, welches eine Rückstellkraft auf das Schließelement aufbringt, die das Schließelement zum Schließen des Leitungssystems gegen den Ventilsitz drückt, einen Druckraum, in welchem das Fluid unter einem Schließdruck steht, mit dem das Fluid eine Schließkraft zum Schließen des Leitungssystems auf das Schließelement aufbringt, wobei das Ventil Mittel aufweist, mit welchen der Schließdruck im Druckraum in Abhängigkeit des freigegebenen Drosselquerschnitts unter den Versorgungsdruck absenkbar ist und die Mittel einen das Schließelement durchlaufenden und in die Zuführleitung mündenden Kanal umfassen, der mit dem Druckraum in Fluidkommunikation steht, wobei der Kanal im Bereich des Drosselquerschnitts in die Zuführleitung mündet.

Wie zuvor erwähnt, öffnen die aus dem Stand der Technik bekannten fluidgesteuerten Ventile deshalb relativ langsam, da der Schließdruck genauso groß ist, wie der Versorgungsdruck. Da die vom Schließdruck aufgebrachte Schließkraft der Kraft, die das Fluid auf das Schließelement aufbringt, entgegen wirkt, muss das Fluid gegen den Schließdruck arbeiten. Im Gegensatz dazu ermöglichen es die vorschlagsgemäßen Mittel, den Schließdruck in Abhängigkeit des freigegebenen Drosselquerschnitts unter den Versorgungsdruck zu senken. Infolgedessen sinkt die Kraft, die notwendig ist, dass Schließelement vom Ventilsitz weg zu bewegen. Hierdurch wird erreicht, dass das Ventil bei einem gegebenen Druck oberhalb des Schwellenwertes im Vergleich zu herkömmlichen Ventilen stärker geöffnet ist. Die stärkere Öffnung hat den Effekt, dass der Versorgungsdruck weniger stark gedrosselt wird, wenn er den Drosselquerschnitt durchströmt. Folglich wird in der Nutzdruck weniger stark reduziert, was insbesondere bei Anwendungen vorteilhaft ist, bei denen ein hoher Nutzdruck benötigt wird.

Erfindungsgemäß umfassen die Mittel einen das Schließelement durchlaufenden und in die Zuführleitung mündenden Kanal, der mit dem Druckraum in Fluidkommunikation steht. Kanäle lassen sich im Allgemeinen relativ einfach fertigen, um den Druckraum insbesondere mit dem Zuführkanal fluidisch zu verbinden. Zudem weisen aus dem Stand der Technik bekannte fluidgesteuerte Ventile bereits Kanäle auf, die zumindest teilweise genutzt werden können. Insofern ist der zusätzliche fertigungstechnische Aufwand, die Mittel bereitzustellen, vergleichsweise gering.

Erfindungsgemäß umfassen die Mittel ein Einsatzelement, welches zusammen mit dem Schließelement zumindest einen Teil des Kanals im Bereich des Drosselquerschnitts bildet. In dieser Ausführungsform ist es möglich, auf einfache Art und Weise den Kanal bis in den Bereich des Drosselquerschnitts zu führen. Aufgrund der oben beschriebenen Drosselung sinkt der statische Druck im Drosselquerschnitt. Das Einsatzelement wird so ausgeführt, dass der Kanal im Bereich des Drosselquerschnitts in den Zuführkanal mündet. Der verringerte statische Druck wird somit ähnlich wie bei einem Venturirohr abgegriffen. Da der Druckraum über den Kanal fluidisch mit dem Zuführkanal verbunden ist, liegt aufgrund der Tatsache, dass der Kanal im Bereich des Drosselquerschnitts in den Zuführkanal mündet, nicht der Versorgungsdruck, sondern der verminderte statische Druck im Druckraum an, so dass der Schließdruck sinkt. Der statische Druck ist umso geringer, je geringer der freigegebene Drosselquerschnitt ist, was bei Beginn der Öffnung des Ventils der Fall ist. Folglich sind bei beginnender Öffnung des Ventils der Schließdruck und die hieraus resultierende Schließkraft besonders gering, so dass das Ventil im Vergleich zu bekannten fluidgesteuerten Ventilen schneller öffnet. Hieraus folgt, dass bei einem gegebenen Versorgungsdruck über dem Schwellenwert ein im Vergleich zu bekannten fluidgesteuerten Ventilen erhöhter Nutzdruck verfügbar ist. Darüber hinaus lassen sich die Kanäle unter Verwendung des Einsatzelements auf eine relativ einfache Art und Weise fertigen, ohne dass zusätzliche Bohrungen, Leitungen oder andere Konstruktionselemente vorgesehen werden müssen.

Gemäß einer weitergebildeten Ausführungsform weist das Ventil einen Bypass auf, der den das Schließelement durchlaufenden und in die Zuführleitung mündenden Kanal und einen das Schließelement umgebenden und in die Abführleitung mündenden Ringspalt umfasst. Die aus dem Stand der Technik bekannten fluidgesteuerten Ventile weisen einen Bypass auf, der die Zuführleitung unter Umgehung des Ventilsitzes mit der Abführleitung verbindet. Der Druckraum ist dabei zwischen dem Kanal und dem Ringspalt angeordnet. Auch hier gilt, dass der zusätzliche Aufwand, die Mittel bereitzustellen, vergleichsweise gering ist.

Eine weitergebildete Ausführungsform zeichnet sich dadurch aus, dass das Schließelement eine zylindrische Ausnehmung aufweist, in welcher das Einsatzelement angeordnet ist. In vielen Fällen weisen Schließelemente von aus dem Stand der Technik bekannten fluidgesteuerten Ventilen eine zylindrische Ausnehmung auf, so dass es sich anbietet, das Einsatzelement dort anzuordnen. Einerseits lassen sich aufgrund dieser Anordnung die Kanäle besonders einfach bereitstellen und andererseits wird kein zusätzlicher Bauraum benötigt, um das Einsatzelement im Ventil unterzubringen.

Nach Maßgabe einer weiteren Ausführungsform weist das Einsatzelement einen U-förmigen Querschnitt mit einem im Wesentlichen senkrecht zur Längsachse verlaufenden ersten Schenkel und einem im Wesentlichen parallel zur Längsachse verlaufenden zweiten Schenkel auf. Anstelle des U-förmigen Querschnitts könnte das Einsatzelement auch in Form einer Scheibe ausgestaltet werden. Der U-förmige Querschnitt hat allerdings den Vorteil, dass die Oberfläche, an der bereits eine erhöhte Strömungsgeschwindigkeit anliegt und somit ein reduzierter statischer Druck vorherrscht, reduziert wird. Diese Druckreduktion bewirkt ansonsten eine Kraft auf das Einsatzelement in schließender Richtung, die nicht erwünscht ist. Zudem lässt sich mit dem U-förmigen Querschnitt Material sparen.

Weiterhin kann das Einsatzelement eine erste Stirnfläche aufweisen, die zum Schließelement hinzeigt und auf welcher eine Anzahl von Vertiefungen angeordnet sind. Die Vertiefungen bilden einen Teil des Kanals und werden vom Fluid durchströmt. Die Vertiefungen ermöglichen es, dass Einsatzelement direkt mit dem Schließelement zu verbinden, ohne Befestigungsvorsprünge oder Abstandhalter vorsehen zu müssen. Hierdurch wird die Art und Weise, wie das Einsatzelement am Schließelement befestigt wird, vereinfacht.

Es bietet sich an, das Einsatzelement am freien Ende des zweiten Schenkels eine zweite Stirnfläche bildet, welche eine zur Längsachse hinzeigende eine Fase aufweist. Das Vorsehen einer Fase am freien Ende des zweiten Schenkels führt dazu, dass das Einsatzelement im Bereich des Drosselquerschnitts relativ spitz zuläuft. Hierdurch wird eine zweite Drosselung und folglich eine Vordrosselung erreicht, wodurch der Schließdruck im Druckraum besonders stark abgesenkt und das Öffnungsverhalten des Ventils weiter verbessert werden kann. An dieser Stelle sei erwähnt, dass eine starke Drosselung auch eine starke Absenkung des Nutzdrucks bewirkt, was auf den ersten Blick dem Ziel der vorliegenden Erfindung entgegensteht. Allerdings nimmt die Drosselung mit zunehmendem Abstand des Schließelements vom Ventilsitz ab. Folglich ist die Absenkung des Nutzdrucks nur von relativ kurzer Dauer und wird mit zunehmendem Abstand des Schließelements vom Ventilsitz wieder kompensiert und ab einem bestimmten Abstand überkompensiert.

Eine weitergebildete Ausführungsform ist dadurch gekennzeichnet, dass das Einsatzelement relativ zum Schließelement bewegbar ist. Hierdurch kann der Drosselquerschnitt in Abhängigkeit vom vorliegenden Versorgungsdruck verändert werden, so dass eine besonders gute Drosselung unmittelbar nach Öffnen des Ventils bereitgestellt werden kann. Wie zuvor erwähnt, bewirkt eine besonders effektive Drosselung eine starke Absenkung des Schließdrucks im Druckraum. Je stärker der Schließdruck im Druckraum abgesenkt werden kann, desto besser ist das Öffnungsverhalten. Dies lässt sich dadurch erreichen, dass das sich der Abstand zwischen der Stirnfläche des Einsatzelements und der Schließfläche des Schließelements im geöffneten Zustand verkleinert. So reduziert sich der Überströmquerschnitt der Vordrosselung, was die Geschwindigkeit erhöht und den statischen Druck reduziert, was wiederum die durch den Druckraum erzeugte Rückstellkraft senkt. Das sinnvolle Maximum liegt hier etwa in dem Punkt, wo die Vordrosselung zur Hauptdrossel wird (Abstand Stirnfläche - Schließfläche etwa 0 mm) .

Eine weitere Ausführungsform zeichnet sich dadurch aus, dass das Einsatzelement mittels einer Anzahl von Federn am Schließelement befestigt ist. Die Verwendung von Federn ermöglicht es, auf einfache Weise die Bewegung des Einsatzelements relativ zum Schließelement zu definieren, beispielsweise dadurch, dass Federn mit einer bestimmten Kennlinie eingesetzt werden. Mit der Wahl der Kennlinie kann festgelegt werden, wie weit sich das Einsatzelement bei einem bestimmten Versorgungsdruck relativ zum Schließelement verschiebt.

Bei einer weitergebildeten Ausführungsform weist das Ventil eine Stelleinrichtung zum Bewegen des Schließelements entlang der Längsachse auf. Wie bereits mehrfach erwähnt, bezieht sich die vorliegende Erfindung auf ein fluidgesteuertes Ventil, welches ohne eine separate Stelleinrichtung auskommt. Eine Vielzahl von aus dem Stand der Technik bekannten fluidgesteuerten Ventilen weisen jedoch eine Stelleinrichtung auf, die aus elektromagnetischen Ventilen bekannt ist und einen Anker, einen Polkern und einen Spulenkörper umfasst. Diese Stelleinrichtung kann als Redundanz verwendet werden, um sicher zu gehen, dass das fluidgesteuerte Ventil unter allen Umständen geschlossen werden kann. Hierdurch wird die Betriebssicherheit des vorliegenden Ventils erhöht.

In einer weiteren Ausführungsform ist das Rückstellelement als ein Permanentmagnet ausgestaltet. Ein wesentliches Merkmal des Permanentmagnets ist, dass die von ihm ausgeübte Kraft über die Größe eines mit einem magnetisch nicht relevanten Fluid wie Luft oder Öl gefüllten Spalts, häufig auch als Luftspalt bezeichnet, beispielsweise die Breite eines Ringspalts, welchen die vom Permanentmagnet ausgehenden Magnetfeldlinien überqueren müssen, gesteuert werden kann. Diese Eigenschaft kann dazu genutzt werden, bestimmte Kennlinien einzustellen, um insbesondere ein gutes Öffnungsverhalten bereitzustellen. Hierzu kann ein verhältnismäßig großer Öffnungsdruck bei Beginn des Öffnungsvorgangs wünschenswert sein, während später eine Drosselung so weit wie möglich vermieden werden soll, um den Nutzdruck so wenig wie möglich abzusenken. Bei einer entsprechenden Anordnung des Spalts, der von den Magnetfeldlinien überquert werden muss und dessen Größe sich beim Öffnungsvorgang entsprechend ändert, lässt sich die vom Permanentmagnet auf das Schließelement ausgeübte Rückstellkraft so ändern, dass das gewünschte Öffnungsverhalten eingestellt werden kann.

Eine Ausführung der Erfindung betrifft ein Fahrzeug, welches ein Ventil nach einem der vorherigen Ansprüche umfasst. Die technischen Effekte und Vorteile, die sich mit dem vorschlagsgemäßen Fahrzeug erreichen lassen, entsprechen denjenigen, die für das vorschlagsgemäße Ventil erörtert worden sind. Zusammenfassend sei darauf hingewiesen, dass es mit dem vorliegenden Ventil möglich ist, ein gutes Öffnungsverhalten bereitzustellen, so dass der Nutzdruck im Vergleich zu bekannten fluidgesteuerten Ventilen bei einem bestimmten, oberhalb des Schwellenwerts liegenden Versorgungsdruck höher ist. Ein höherer Nutzdruck kann beispielsweise unter folgenden Bedingungen vorteilhaft genutzt werden: Bei Fahrzeugen kann das Motoröl zur Kühlung des Kolbenbodens eines Verbrennungsmotors verwendet werden. Eine Kühlung des Kolbenbodens ist allerdings nur dann notwendig, wenn der Verbrennungsmotor über einer bestimmten Sauglast betrieben wird. Beispielsweise nach einem Start, insbesondere nach einem Kaltstart und bei Stillstand des Fahrzeuges ist eine Kühlung des Kolbenbodens im Allgemeinen nicht erforderlich.

Ein Öffnen des vorliegenden Ventils kann dazu verwendet werden, den Nutzdruck zum Beaufschlagen einer Düse zu verwenden, mit welchem Motoröl gegen den Kolbenboden gespritzt wird, der folglich gekühlt wird.

Eine Umsetzung der vorliegenden Erfindung betrifft ein Verfahren zum Betreiben eines Ventils zum Verschließen und Öffnen eines Leitungssystems, wobei das Ventil umfasst
- einen Ventilkörper aus Metall oder Kunststoff, der einen Ventilsitz bildet,
- ein Leitungssystem mit einer Zuführleitung zum Zuführen eines Fluids zum Ventilsitz und einer Abführleitung zum Abführen des Fluids vom Ventilsitz, wobei das Fluid in der Zuführleitung unter einem Versorgungsdruck und in der Abführleitung unter einem Nutzdruck steht,
- ein Schließelement, welches zum Verschließen und Öffnen des Leitungssystems mit dem Ventilsitz zusammenwirkt,
- ein Rückstellelement, welches eine Rückstellkraft auf das Schließelement aufbringt, die das Schließelement zum Schließen des Leitungssystems gegen den Ventilsitz (26) drückt, und
- einen Druckraum, in welchem das Fluid unter einem Schließdruck steht, mit dem das Fluid eine Schließkraft zum Schließen des Leitungssystems auf das Schließelement aufbringt, wobei das Verfahren folgenden Schritt umfasst:
   - Freigeben eines Drosselquerschnitts zwischen dem Ventilsitz und dem Schließelement, wenn der Versorgungsdruck einen vorgebbaren Schwellenwert übersteigt, und
   - Senken des Schließdrucks im Druckraum unter den Versorgungsdruck mit entsprechend ausgestalteten Mitteln, die einen das Schließelement durchlaufenden und in die Zuführleitung mündenden Kanal umfassen, der mit dem Druckraum in Fluidkommunikation steht, wobei der Kanal im Bereich des Drosselquerschnitts in die Zuführleitung mündet.

Die technischen Effekte und Vorteile, die sich mit dem vorschlagsgemäßen Verfahren erreichen lassen, entsprechen denjenigen, die für das vorschlagsgemäße Ventil erörtert worden sind. Zusammenfassend sei darauf hingewiesen, dass es mit dem vorliegenden Ventil möglich ist, ein gutes Öffnungsverhalten bereitzustellen, so dass der Nutzdruck im Vergleich zu bekannten fluidgesteuerten Ventilen bei einem bestimmten, oberhalb des Schwellenwerts liegenden Versorgungsdruck höher ist.

Eine Ausgestaltung der Erfindung betrifft die Verwendung eines Ventils nach einem der zuvor erläuterten Ausführungsformen für Anwendungen im Automotive-Bereich und insbesondere zum Kühlen von Kolbenböden. Die technischen Effekte und Vorteile, die sich mit der vorschlagsgemäßen Verwendung erreichen lassen, entsprechen denjenigen, die für das vorschlagsgemäße Ventil erörtert worden sind. Zusammenfassend sei darauf hingewiesen, dass es mit dem vorliegenden Ventil möglich ist, ein gutes Öffnungsverhalten bereitzustellen, so dass der Nutzdruck im Vergleich zu bekannten fluidgesteuerten Ventilen bei einem bestimmten, oberhalb des Schwellenwerts liegenden Versorgungsdruck höher ist.

Beispielhafte Ausführungsformen der Erfindung werden im Folgenden unter Bezugnahme auf die beigefügten Zeichnungen näher erläutert. Es zeigen
- Figur 1: eine Schnittdarstellung durch ein Ausführungsbeispiel eines erfindungsgemäßen fluidgesteuerten Ventils im geschlossenen Zustand,
- Figur 2: das in Figur 1 dargestellte Ventil im geöffneten Zustand,
- Figur 3a): eine vergrößerte Darstellung des in Figur 1 gekennzeichneten Bereichs X,
- Figur 3b): eine vergrößerte Darstellung des in Figur 3a) gekennzeichneten Bereichs Z,
- Figur 3c): eine vergrößerte Darstellung ähnlich der Figur 3b), wobei sich jedoch das Ventil im geöffneten Zustand gemäß Figur 2 befindet,
- Figur 4: eine perspektivische Darstellung auf ein Einsatzelement,
- Figur 5: eine vergrößerte Darstellung des in Figur 1 gekennzeichneten Bereichs Y, und
- Figur 6: eine perspektivische Ansicht eines Teils eines weiteren Ausführungsbeispiels des erfindungsgemäß fluidgesteuerten Ventils.

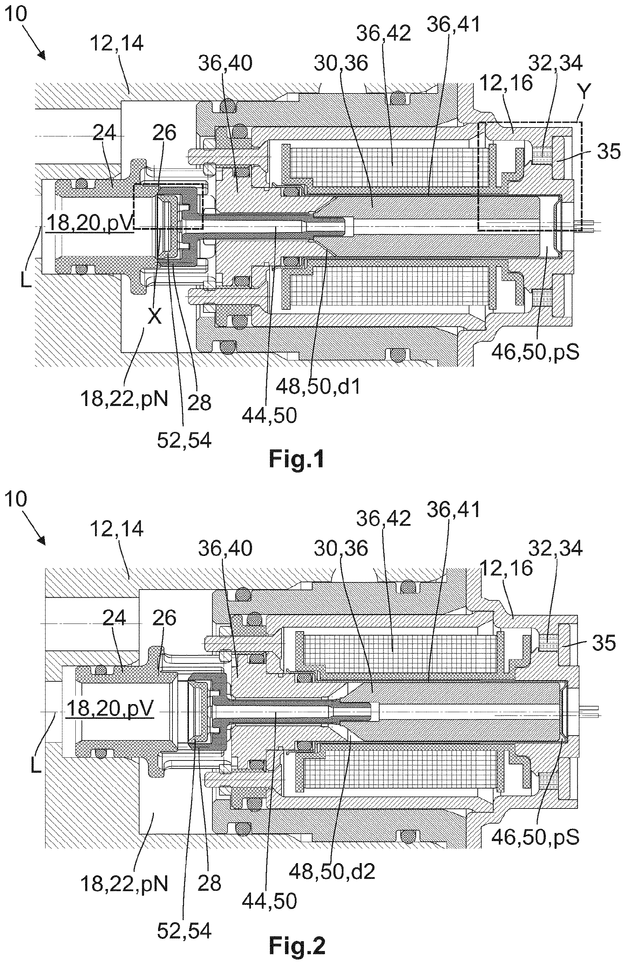

In Figur 1 ist ein Ausführungsbeispiel eines erfindungsgemäßen fluidgesteuerten Ventils 10 anhand einer Schnittdarstellung gezeigt. Das Ventil 10 weist ein Gehäuse 12 mit einem ersten Gehäuseteil 14 und einem zweiten Gehäuseteil 16 auf, wobei im ersten Gehäuseteil 14 ein Leitungssystem 18 angeordnet ist, welches eine Zuführleitung 20 und eine Abführleitung 22 umfasst. Weiterhin ist im ersten Gehäuseteil 14 ein Ventilkörper 24 angeordnet, welcher einen Ventilsitz 26 bildet. Der Ventilkörper 24 kann beispielsweise aus Metall oder Kunststoff gefertigt sein. Ferner umfasst das Ventil 10 ein Schließelement 28, welches entlang einer Längsachse L verschiebbar angeordnet ist. Das Schließelement 28 ist mit einem Anker 30 verbunden, der mit einem Rückstellelement 32, in diesem Fall mit einem radial magnetisierten Permanentmagnet 34 zusammenwirkt. Der Permanentmagnet 34 ist in einer entsprechend gestalteten Aufnahme des zweiten Gehäuseteils 16 angeordnet und wird mittels eines Blechs 35, welches magnetisch nicht relevant ist, in der Aufnahme fixiert. Das Blech 35 kann beispielsweise aus Edelstahl gefertigt sein.

Der Anker 30 ist Teil einer Stelleinrichtung 36, mit welcher das Schließelement 28 entlang der Längsachse L verschoben werden kann. Die Stelleinrichtung 36 umfasst weiterhin einen Polkern 40, der das Schließelement 28 umgibt, und eine Hülse 41, welche den Anker 30 umschließt. Radial außerhalb der Hülse 41 ist ein ebenfalls zur Stelleinrichtung 36 zählender Spulenkörper 42 angeordnet, der auf nicht näher gezeigte Weise mit elektrischem Strom beaufschlagt werden kann, wodurch das Schließelement 28 entlang der Längsachse L verschoben werden kann. An dieser Stelle sei jedoch bereits vermerkt, dass die Stelleinrichtung 36 hauptsächlich zum Schließen des Ventils auch oberhalb des Öffnungsdrucks vorgesehen ist, und das Schließelement 28 im unbetätigten Betrieb ausschließlich über ein Fluid verschoben wird, welches vom Zuführleitung 20 in die Abführleitung 22 strömt, wenn das Ventil 10 geöffnet ist.

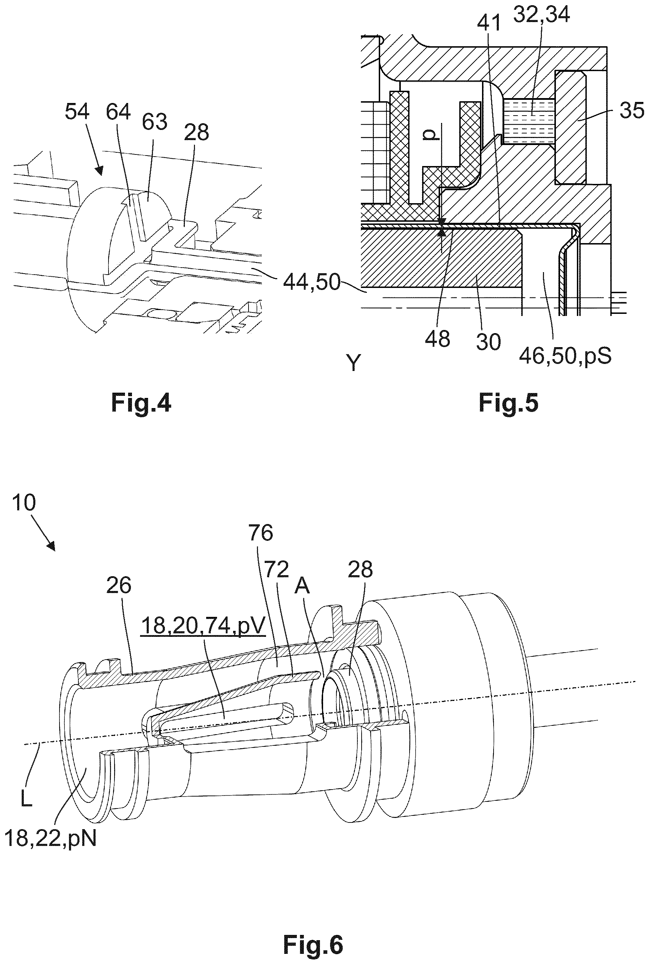

Das Schließelement 28 weist einen Kanal 44 auf, welcher das Schließelement 28 mittig durchläuft und der sich innerhalb des Ankers 30 entlang der Längsachse L fortsetzt. Der Kanal 44 mündet am vom Schließelement 28 aus gesehen hinteren Ende des Ankers 30 in einen Druckraum 46. Zwischen der Hülse 41 und dem Anker 30 sowie zwischen dem Schließelement 28 und dem Polkern 40 wird ein Ringspalt 48 ausgebildet. Der Ringspalt 48 weist zwischen dem Anker 30 und der Hülse 41 einen Abstand p auf (siehe Figur 5), der im dargestellten Beispiel zwischen 0,03 und 0,07 mm beträgt, wodurch eine Querschnittsfläche von zwischen 0,72 bis 1,68 mm² erzielt wird. Weiterhin weist der Ringspalt 48 zwischen dem Anker 30 und dem Polkern 40 einen Abstand d auf, welcher sich je nach Stellung des Ankers 30 zwischen den Werten d1 und d2 ändert. Im in Figur 1 dargestellten geschlossenen Zustand ist der Abstand d1 deutlich geringer als der Abstand d2 im in Figur 2 dargestellten geöffneten Zustand des Ventils 10.

Der Kanal 44, der Druckraum 46 und der Ringspalt 48 bilden einen Bypass 50, mit welchem die Zuführleitung 20 und die Abführleitung 22 unter Umgehung des Schließelements 28 verbunden werden. Der Ringspalt 48 insbesondere zwischen der Hülse 41 und dem Anker 30 ist konstruktionsbedingt und für die Umsetzung des erfindungsgemäßen Prinzips nicht notwendig. Insofern ist es nicht notwendig, einen Bypass 50 vorzusehen. Einzig die Fluidkommunikation zwischen der Zuführleitung 20 und dem Druckraum 46 muss gegeben sein.

Das Fluid, welches in die Zuführleitung 20 einströmt, steht unter einem Versorgungsdruck pV. Das Fluid in der Abführleitung 22 steht unter einem Nutzdruck pN, und das Fluid im Druckraum 46 steht unter einem Schließdruck pS.

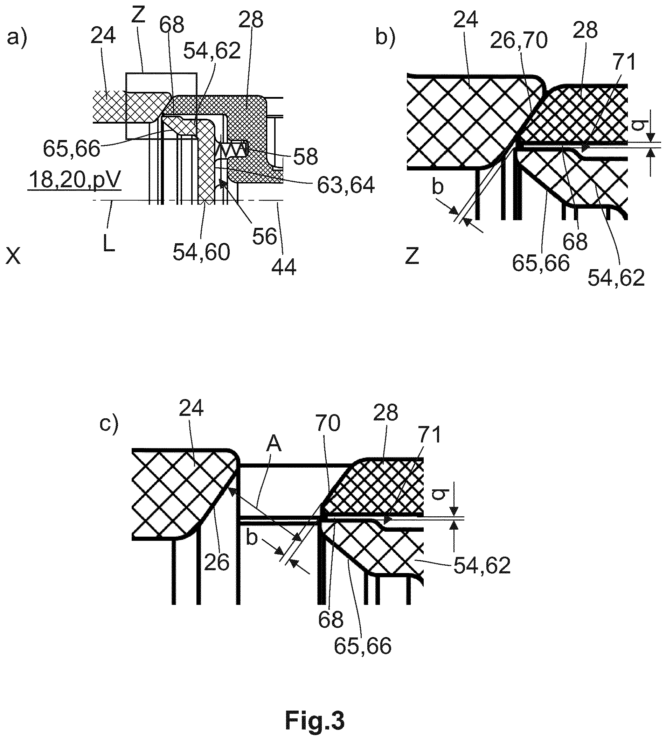

Weiterhin weist das vorliegende Ventil 10 Mittel 52 auf, mit welchen der Schließdruck pS im Druckraum 46 unter den Versorgungsdruck pV absenkbar ist, wie im Folgenden näher erläutert werden wird. Im dargestellten Beispiel umfassen die Mittel 52 ein Einsatzelement 54, welches in Figur 3a) vergrößert dargestellt ist. Das Schließelement 28 weist an seinem freien Ende, welches mit dem Ventilsitz 26 zum Schließen des Ventils 10 zusammenwirkt, einen U-förmigen Abschnitt auf. Innerhalb des U-förmigen Abschnitts bildet das Schließelement 28 eine zylindrische Ausnehmung 56, in welcher das Einsatzelement 54 angeordnet ist. Das Einsatzelement 54 ist im dargestellten Beispiel mittels einer Feder 58 am Schließelement 28 befestigt, so dass es sich entlang der Längsachse L bewegen kann. Alternativ kann das Einsatzelement 54 auch direkt ohne die Verwendung von Federn 58 fest am Schließelement 28 befestigt sein.

Das Einsatzelement 54 weist ebenfalls einen U-förmigen Querschnitt auf, wozu es einen ersten Schenkel 60, der in etwa senkrecht zur Längsachse L verläuft, und einen zweiten Schenkel 62, der im Wesentlichen parallel zur Längsachse L verläuft, aufweist. Aus Figur 4 ist erkennbar, dass das Einsatzelement 54 auf einer ersten Stirnfläche 63, die zum Schließelement 28 hinzeigt, insgesamt vier Vertiefungen 64, die kreuzweise verlaufen, aufweist.

Auf einer zweiten Stirnfläche 65, welche am freien Ende des zweiten Schenkels 62 angeordnet ist, weist das Einsatzelement 54 eine Fase 66 auf, welche zur Längsachse L hinzeigt (siehe insbesondere Figuren 3a) bis 3c)).

Das Einsatzelement 54 ist so am Schließelement 28 befestigt, dass ein parallel zur Längsachse L verlaufender Spalt 68 zwischen dem zweiten Schenkel 62 und dem Schließelement 28 gebildet wird. Der den Spalt 68 bildenden Abstand q zwischen dem Schließelement 28 und dem Einsatzelement 54 beträgt zwischen 0,07 und 0,13 mm, so dass eine Querschnittfläche von 1,78 und 3,31 mm² bereitgestellt wird. Die Vertiefungen 64 stellen die Fluidkommunikation zwischen dem Spalt 68 und dem Kanal 44 her, was insbesondere aus der Figur 4 hervorgeht.

Das vorliegende Ventil 10 wird auf folgende Weise betrieben: Im Ausgangszustand liegt der Versorgungsdruck pV des Fluids im Zuführkanal unter einem bestimmten Schwellenwert, der beispielsweise zwischen 0,8 und 1 bar betragen kann. Aufgrund der Tatsache, dass der Druckraum 46 über den vom Einsatzelement 54 bereitgestellten Spalt 68 und über den Kanal 44 mit der Zuführleitung 20 in Fluidkommunikation steht, ist der Schließdruck pS im Druckraum 46 genauso groß wie der Versorgungsdruck pV.

In diesem Fall ist die Summe der vom Rückstellelement 32 aufgebrachten Rückstellkraft und der vom Schließdruck pS aufgebrachten Schließkraft größer als die vom Fluid infolge des Versorgungsdrucks auf das Schließelement 28 wirkende Kraft. Folglich wird das Schließelement 28 gegen den Ventilsitz 26 gedrückt, wodurch das Ventil 10 geschlossen ist. Der im Abführkanal herrschende Nutzdruck pN beträgt 0 bar.

Steigt nun der Versorgungsdruck pV über den Schwellenwert, beginnt sich das Schließelement 28 vom Ventilsitz 26 weg zu bewegen. Diese Bewegung ergibt sich aus einem Vergleich der Figuren 3b) und 3c). Folglich wird ein Drosselquerschnitt A freigegeben, welche vom Fluid durchströmt werden kann. Bei Beginn dieser Bewegung des Schließelements 28 weg vom Ventilsitz 26 ist der Drosselquerschnitt A sehr klein, so dass das Schließelement 28 und der Ventilsitz 26 zusammen die Wirkung einer Drossel haben. Der Permanentmagnet 34 unterstützt die Bewegung des Schließelements 28 dadurch, dass seine Rückstellkraft auf den Anker 30 und folglich das Schließelement 28 mit steigender Breite d1 des Ringspalts 48 fällt und somit eine größere Öffnungsbewegung bei gleichem Versorgungsdruck pV ermöglicht. Dies bewirkt einen sinkenden Druckabfall über das Ventil, der Nutzdruck steigt pN steigt. Die verringerte, aber dennoch vorhandene Drosselung erzeugt eine Reduktion des statischen Drucks im durch Ventilsitz 26 und Schließelement 28 definierten Ringspalt 48.

Wie insbesondere aus den Figuren 3b) und 3c) ersichtlich, mündet der Spalt 68 im Bereich des Drosselquerschnitts A in die Zuführleitung 20. Hierdurch wird bewirkt, dass der verminderte Staudruck über den Spalt 68 und über den Kanal 44 in den Druckraum 46 übertragen wird, so dass der Schließdruck pS sinkt. Dies wiederum hat zur Folge, dass die vom Druckraum 46 auf das Schließelement 28 aufgebrachte Schließkraft ebenfalls sinkt und bei einem gegebenen Versorgungsdruck pV das Schließelement 28 weiter gegen das Rückstellelement 32 weg vom Ventilsitz 26 verschoben werden kann als es bei bekannten Ventilen der Fall ist. Bekannte Ventile weisen die Mittel 52 und insbesondere das Einsatzelement 54 nicht auf, so dass der Versorgungsdruck pV auch im Druckraum 46 anliegt und nicht abgesenkt werden kann. Beim erfindungsgemäßen Ventil 10 ist der Drosselquerschnitt A bei gegebenen Versorgungsdruck pV größer, wodurch die Drosselung des Versorgungsdrucks pV auf den Nutzdruck pN bei Durchströmen des Drosselquerschnitts A geringer ausfällt. Dieser Effekt wird durch den Einsatz des Permanentmagnets 34 noch verstärkt, da die vom Permanentmagnet 34 auf den Anker 30 und damit auf das Schließelement 28 aufgebrachte Rückstellkraft mit zunehmendem Abstand d des Ringspalts 50 abnimmt. Im Ergebnis hat man bei einem gegebenen Versorgungsdruck pV einen höheren Nutzdruck pN als bei bekannten Ventilen.

Wie bereits erläutert, ist das Einsatzelement 54 mit den Federn 58 am Schließelement 28 befestigt (vgl. Figur 3a). Die Kennlinien der Federn 58 sind so gewählt, dass im geschlossenen Zustand des Ventils 10, also dann, wenn das Schließelement 28 mit einer Schließfläche 70 (siehe Figur 3c) am Ventilsitz 26 anliegt, ein Abstand b, der den geringsten Abstand zwischen dem Einsatzelement 54 und der Schließfläche 70 beschreibt, nicht unterschritten wird. Im dargestellten Beispiel beträgt der Abstand b zwischen 0,09 und 0,11 mm. Hierdurch wird ein Druckausgleich zwischen dem Zuführkanal 20 und dem Druckraum 46 gewährleistet. Selbiges gilt analog, wenn das Einsatzelement 54 fest am Schließelement 28 befestigt ist.

Wie oben beschrieben, ist zum Realisieren eines guten Öffnungsverhaltens eine verhältnismäßig starke Drosselung bei Beginn des Öffnungsvorgangs wichtig, um den Schließdruck pS im Druckraum 44 effektiv zu senken, während später eine Drosselung so weit wie möglich vermieden werden soll, um den Nutzdruck pN so wenig wie möglich abzusenken. Für den dargestellten Fall, dass das Einsatzelement 54 relativ zum Schließelement 28 bewegbar ist, wird das Einsatzelement 54 mit steigendem Versorgungsdruck pV entlang der Längsachse L zum Schließelement 28 hin verschoben und die Federn 58 gestaucht. Der Abstand b vergrößert sich folglich, so dass die vom Einsatzelement 54 ausgehende Drosselwirkung immer weiter abnimmt und ab einem bestimmten Punkt vernachlässigbar gering wird. Dies hat zur Folge, dass der Nutzdruck pN mit steigendem Versorgungsdruck pV immer weniger stark gedrosselt wird. Mit anderen Worten wird bei gleichbleibendem Hub des Ventils 10 der Druckabfall reduziert. Darüber hinaus kann sich der Abstand (Figur 3c)) nach dem Öffnen reduzieren. So reduziert sich der Überströmquerschnitt der Vordrosselung, wodurch die Geschwindigkeit erhöht und den statischen Druck reduziert wird, was wiederum die durch den Druckraum erzeugte Rückstellkraft senkt. Das sinnvolle Maximum liegt hier etwa in dem Punkt, wo die Vordrosselung zur Hauptdrossel wird (b etwa 0 mm). Hierdurch wird das Öffnungsverhalten verbessert und der Hub bei gegebenem Versorgungsdruck vergrößert.

Wie insbesondere aus den Figuren 3b) und 3c) hervorgeht, weist das Einsatzelement 54 auf seinem zweiten Schenkel 62 einen Absatz 71 auf. Der Absatz 71 bewirkt, dass der Abstand q des Spalts 68 nur über einen Teil des zweiten Schenkels 62 vorliegt und sich der Spalt 68 danach erweitert. Aufgrund des hierdurch gegenüber eine Ausgestaltung ohne Absatz verkürzten Abstand q reduziert sich der Druckverlust insbesondere bei einer ungünstigen Toleranzlage. Das oben beschriebene gewünschte Öffnungsverhalten wird hierdurch unterstützt. Außerdem wird die Dichthaltekraft des Ventils 10 im geschlossenen Zustand bei unterschiedlichen Toleranzlagen stabilisiert.

Die Schließfläche 70 des Schließelements 28 folgt dem Verlauf der Oberfläche eines Kugelsegments und ist daher konvex gewölbt. Der Ventilsitz 26 ist hingegen weitgehend plan. Hierdurch wird eine Linienberührung und keine Flächenberührung bei geschlossenem Ventil 10 erzeugt. Die Erzeugung einer Linienberührung hat gegenüber einer Flächenberührung den Vorteil, dass ein sicherer Verschluss des Ventils 10 auch bei Verwendung von weniger strengen Toleranzen gewährleistet ist.

Figur 6 zeigt ein weiteres Ausführungsbeispiel des erfindungsgemäßen fluidgesteuerten Ventils 10 anhand einer perspektivischen Teildarstellung, wobei aus Darstellungsgründen das Einsatzelement 54 nicht gezeigt ist. Der Aufbau des Schließelements 28 und des Einsatzelements 54 sowie ihre Anordnung relativ zueinander sind dieselben wie in dem in den Figuren 1 bis 5 gezeigten Ausführungsbeispielen. In diesem Fall wird das Ventil 10 allerdings in umgekehrter Richtung durchströmt. Während im Ausführungsbeispiel, welches in den Figuren 1 bis 5 dargestellt ist, die Zuführleitung 20 konzentrisch zur Längsachse L und die Abführleitung 22 radial aus dem ersten Gehäuseteil 14 austritt, ist es beim weiteren Ausführungsbeispiel umgekehrt. Die Zuführleitung 20 tritt radial in das erste Gehäuseteil 14 ein und die Abführleitung 22 verläuft konzentrisch zur Längsachse L. Um die oben beschriebenen Effekte erreichen zu können, genügt es nicht, einfach die Strömungsrichtung des Fluids umzukehren. Vielmehr müssen das Einsatzelement 54 und das Schließelement 28 auf dieselbe Weise angeströmt werden. Hierzu wird der Ventilsitz 26 so modifiziert, dass die Zuführleitung 20 einen im Wesentlichen zylindrischen Abschnitt 72 umfasst, der innerhalb der Abführleitung 22 angeordnet ist und über einen Schlitz 74 mit der übrigen Zuführleitung 20 kommuniziert. Im dargestellten Beispiel verjüngt sich der im Wesentlichen zylindrische Abschnitt 72 mit zunehmendem Abstand von Schließelement 28. Das Fluid strömt radial in das erste Gehäuseteil 12 ein und durchströmt den Schlitz 74, um anschließend im Wesentlichen parallel zur Längsachse L hin zum Schließelement 28 und zum Einsatzelement 54 zu strömen. Nachdem das Fluid den Drosselquerschnitt A passiert hat, strömt es in die Abführleitung 22 und im Wesentlichen parallel zur Längsachse L durch einen Ringraum 76, der vom zylindrischen Abschnitt 72 innerhalb der Abführleitung 22 gebildet wird und verlässt das erste Gehäuseteil 14 ebenfalls im Wesentlichen parallel zur Längsachse L. Auch in diesem Ausführungsbeispiel wird das Öffnungsverhalten verbessert und der Nutzdruck pN weniger stark gedrosselt als bei herkömmlichen fluidgesteuerten Ventilen.

### Bezugszeichenliste

- 10: Ventil
- 12: Gehäuse
- 14: erstes Gehäuseteil
- 16: zweites Gehäuseteil
- 18: Leitungssystem

- 20: Zuführleitung
- 22: Abführleitung
- 24: Ventilkörper
- 26: Ventilsitz
- 28: Schließelement

- 30: Anker
- 32: Rückstellelement
- 34: Permanentmagnet
- 35: Blech
- 36: Stelleinrichtung

- 40: Polkern
- 41: Hülse
- 42: Spulenkörper
- 44: Kanal
- 46: Druckraum
- 48: Ringspalt

- 50: Bypass
- 52: Mittel
- 54: Einsatzelement
- 56: Ausnehmung
- 58: Feder
- 60: erster Schenkel
- 62: zweiter Schenkel
- 63: erste Stirnfläche
- 64: Vertiefung
- 65: zweite Stirnfläche
- 66: Fase
- 68: Spalt
- 70: Schließfläche

- 71: Absatz
- 72: zylindrischer Abschnitt
- 74: Schlitz
- 76: Ringraum

- A: Drosselquerschnitt
- b: Abstand Stirnfläche - Schließfläche
- d: Abstand
- pV: Versorgungsdruck
- pN: Nutzdruck
- pS: Schließdruck
- L: Längsachse
- p: Abstand Anker - Hülse
- q: Abstand Schließelement - Einsatzelement

## Patentansprüche

1. Ventil zum Verschließen und Öffnen eines Leitungssystems, umfassend
- einen Ventilkörper (24) aus Metall oder Kunststoff, der einen Ventilsitz (26) bildet,
- ein Leitungssystem (18) mit einer Zuführleitung (20) zum Zuführen eines Fluids zum Ventilsitz (26) und einer Abführleitung (22) zum Abführen des Fluids vom Ventilsitz (26), wobei das Fluid in der Zuführleitung (20) unter einem Versorgungsdruck (pV) und in der Abführleitung (22) unter einem Nutzdruck (pN) steht,
- ein Schließelement (28), welches zum Verschließen und Öffnen des Leitungssystems mit dem Ventilsitz (26) zusammenwirkt, wobei das Schließelement (28) zwischen dem Ventilsitz (26) und dem Schließelement (28) einen Drosselquerschnitt (A) freigibt,
- ein Rückstellelement (32), welches eine Rückstellkraft auf das Schließelement (28) aufbringt, die das Schließelement (28) zum Schließen des Leitungssystems gegen den Ventilsitz (26) drückt,
- einen Druckraum (46), in welchem das Fluid unter einem Schließdruck (pS) steht, mit dem das Fluid eine Schließkraft zum Schließen des Leitungssystems (18) auf das Schließelement (28) aufbringt, und
- wobei das Ventil (10) Mittel (52) aufweist, mit welchen der Schließdruck (pS) im Druckraum (46) in Abhängigkeit des freigegebenen Drosselquerschnitts (A) unter den Versorgungsdruck (pV) absenkbar ist,
- die Mittel (52) einen das Schließelement (28) durchlaufenden und in die Zuführleitung (20) mündenden Kanal (44) umfassen, der mit dem Druckraum (46) in Fluidkommunikation steht, wobei der Kanal (44) im Bereich des Drosselquerschnitts (A) in die Zuführleitung (20) mündet,
**dadurch gekennzeichnet, dass** die Mittel (52) ein Einsatzelement (54) umfassen, welches zusammen mit dem Schließelement (28) zumindest einen Teil des Kanals (44) im Bereich des Drosselquerschnitts (A) bildet.

2. Ventil nach Anspruch 1,
**dadurch gekennzeichnet, dass** das Ventil (10) einen Bypass (50) aufweist, der den Kanal (44) und einen das Schließelement (28) umgebenden und in die Abführleitung (22) mündenden Ringspalt (48) umfasst.

3. Ventil nach einem der vorherigen Ansprüche
**dadurch gekennzeichnet, dass** das Schließelement (28) eine zylindrische Ausnehmung (56) aufweist, in welcher das Einsatzelement (54) angeordnet ist.

4. Ventil nach Anspruch 3,
**dadurch gekennzeichnet, dass** das Einsatzelement (54) einen U-förmigen Querschnitt mit einem im Wesentlichen senkrecht zur Längsachse (L) verlaufenden ersten Schenkel (60) und einem im Wesentlichen parallel zur Längsachse (L) verlaufenden zweiten Schenkel (62) aufweist.

5. Ventil nach einem der vorherigen Ansprüche,
**dadurch gekennzeichnet, dass** das Einsatzelement (54) eine erste Stirnfläche (63) aufweist, die zum Schließelement (28) hinzeigt und auf welcher eine Anzahl von Vertiefungen (64) angeordnet sind.

6. Ventil nach Anspruch 4,
**dadurch gekennzeichnet, dass** das Einsatzelement (54) am freien Ende des zweiten Schenkels (62) eine zweite Stirnfläche (65) bildet, welche eine zur Längsachse (L) hinzeigende eine Fase (66) aufweist.

7. Ventil nach einem der vorherigen Ansprüche,
**dadurch gekennzeichnet, dass** das Einsatzelement (54) relativ zum Schließelement (28) bewegbar ist.

8. Ventil nach Anspruch 7,
**dadurch gekennzeichnet, dass** das Einsatzelement (54) mittels einer Anzahl von Federn (58) am Schließelement (28) befestigt ist.

9. Ventil nach einem der vorherigen Ansprüche,
**dadurch gekennzeichnet, dass** das Ventil (10) eine Stelleinrichtung (36) zum Bewegen des Schließelements (28) entlang der Längsachse (L) aufweist.

10. Ventil nach einem der vorherigen Ansprüche,
**dadurch gekennzeichnet, dass** das Rückstellelement (32) als ein Permanentmagnet (34) ausgestaltet ist.

11. Fahrzeug, umfassend ein Ventil (10) nach einem der vorherigen Ansprüche.

12. Verfahren zum Betreiben eines Ventils zum Verschließen und Öffnen eines Leitungssystems, wobei das Ventil umfasst
- einen Ventilkörper (24) aus Metall oder Kunststoff, der einen Ventilsitz (26) bildet,
- ein Leitungssystem (18) mit einer Zuführleitung (20) zum Zuführen eines Fluids zum Ventilsitz (26) und einer Abführleitung (22) zum Abführen des Fluids vom Ventilsitz (26), wobei das Fluid in der Zuführleitung (20) unter einem Versorgungsdruck (pV) und in der Abführleitung (22) unter einem Nutzdruck (pN) steht,
- ein Schließelement (28), welches zum Verschließen und Öffnen des Leitungssystems mit dem Ventilsitz (26) zusammenwirkt,
- ein Rückstellelement (32), welches eine Rückstellkraft auf das Schließelement (28) aufbringt, die das Schließelement (28) zum Schließen des Leitungssystems gegen den Ventilsitz (26) drückt, und
- einen Druckraum (46), in welchem das Fluid unter einem Schließdruck (pS) steht, mit dem das Fluid eine Schließkraft zum Schließen des Leitungssystems (18) auf das Schließelement (28) aufbringt,
wobei das Verfahren folgende Schritte umfasst:
- Freigeben eines Drosselquerschnitts (A) zwischen dem Ventilsitz (26) und dem Schließelement (28), wenn der Versorgungsdruck (pV) einen vorgebbaren Schwellenwert übersteigt, und
- Senken des Schließdrucks (pS) im Druckraum unter den Versorgungsdruck (pV) mit entsprechend ausgestalteten Mitteln (52), die einen das Schließelement (28) durchlaufenden und in die Zuführleitung (20) mündenden Kanal (44) umfassen, der mit dem Druckraum (46) in Fluidkommunikation steht, wobei der Kanal (44) im Bereich des Drosselquerschnitts (A) in die Zuführleitung (20) mündet und die Mittel (52) ein Einsatzelement (54) umfassen, welches zusammen mit dem Schließelement (28) zumindest einen Teil des Kanals (44) im Bereich des Drosselquerschnitts (A) bildet.

## Claims

1. Valve for opening and closing a pipeline system,
comprising
- a valve body (24) of metal or plastic that forms a valve seat (26),
- a pipeline system (18) with an inlet (20) for supplying a fluid to the valve seat (26) and with an outlet (22) for discharging the fluid from the valve seat (26), wherein the fluid is under a supply pressure (pV) in the inlet (20) and under a working pressure (pN) in the outlet (22),
- a closing element (28) with interacts with the valve seat (26) to close and open the pipeline system, wherein the closing element (28) enables a throttle cross section (A) between the valve seat (26) and the closing element (28),
- a reset element (32) that exerts a resetting force onto the closing element (28) which presses the closing element (28) against the valve seat (26) to close the pipeline system,
- a pressure chamber (46) in which the fluid is under a closing pressure (pS) with which the fluid exerts a closing force onto the closing element (28) in order to close the pipeline system (18), and
- wherein the valve (10) comprises means (52) that allow the closing pressure (pS) in the pressure chamber (46) to be reduced below the supply pressure (pV) in dependency on the enabled throttle cross section (A),
- the means (52) comprise a duct (44) that extends through the closing element (28) and ends in the inlet (20) and which is in fluid communication with the pressure chamber (46), wherein the duct (44) ends in the inlet (20) in the region of the throttle cross section (A),
**characterized in that** the means (52) comprise an insertion element (54) that forms, together with the closing element (28), at least part of the duct (44) in the region of the throttle cross section (A).

2. Valve in accordance with claim 1,
**characterized in that** the valve (10) has a bypass (50) that comprises an annular slot (48) that surrounds the duct (44) and the closing element (28) and that ends in the outlet (22).

3. Valve in accordance with any of the preceding claims,
further **characterized in that** the closing element (28) has a cylindrical recess (56) in which the insertion element (54) is disposed.

4. Valve in accordance with claim 3,
**characterized in that** the insertion element (54) has a U-shaped cross section with a first member (60) extending essentially vertically to the longitudinal axis (L) and a second member (62) extending essentially parallel to the longitudinal axis (L).

5. Valve in accordance with any of the preceding claims,
**characterized in that** the insertion element (54) has a first end face (63) which faces the closing element (28) and on which numerous indentations (64) are disposed.

6. Valve in accordance with claim 4,
**characterized in that** the insertion element (54) forms a second end face (65) at the free end of the second member (62) that has a bevel (66) facing the longitudinal axis (L).

7. Valve in accordance with any of the preceding claims,
**characterized in that** the insertion element (54) is slidable relative to the closing element (28).

8. Valve in accordance with claim 7,
**characterized in that** the insertion element (54) is attached to the closing element (28) by means of numerous springs (58).

9. Valve in accordance with any of the preceding claims,
**characterized in that** the valve (10) has a setting device (36) for moving the closing element (28) along the longitudinal axis (L).

10. Valve in accordance with any of the preceding claims,
**characterized in that** the reset element (32) is implemented as a permanent magnet (34).

11. Vehicle comprising a valve (10) in accordance with any of the preceding claims.

12. Method for operating a valve for closing and opening a pipeline system, wherein the valve comprises
- a valve body (24) made of metal or plastic that forms a valve seat (26),
- a pipeline system (18) with an inlet (20) for supplying a fluid to the valve seat (26) and with an outlet (22) for discharging the fluid from the valve seat (26), wherein the fluid in under a supply pressure (pV) in the inlet (20) and under a working pressure (pN) in the outlet (22),
- a closing element (28) that interacts with the valve seat (26) to close and open the pipeline system,
- a reset element (32) that exerts a resetting force onto the closing element (28) which presses the closing element (28) against the valve seat (26) to close the pipeline system,
- a pressure chamber (46) in which the fluid is under a closing pressure (pS) with which the fluid exerts a closing force onto the closing element (28) in order to close the pipeline system (18),
wherein the method comprises the following steps:
- enabling a throttle cross section (A) between the valve seat (26) and the closing element (28) when the supply pressure (pV) exceeds a specifiable threshold, and
- lowering the closing pressure (pS) in the pressure chamber to below the supply pressure (pV) with correspondingly designed means (52) that comprise a duct (44) that extends through the closing element (28) and ends in the inlet (20) and which is in fluid communication with the pressure chamber (46), wherein the duct (44) ends in the inlet (20) in the region of the throttle cross section (A), and the means (52) comprise an insertion element (54) that forms, together with the closing element (28), at least part of the duct (44) in the region of the throttle cross section (A).

## Revendications

1. Soupape pour fermer et ouvrir un système de conduites comprenant :
- un corps de soupape (24) en métal ou en matière plastique formant un siège de soupape (26),
- un système de conduite (18) comprenant une conduite d'entrée (20) pour fournir un fluide au siège de soupape (26) et une conduite de sortie (22) pour évacuer le fluide du siège de soupape (26), le fluide arrivant dans la conduite d'entrée (20) à une pression d'alimentation (pV) et étant dans la conduite de sortie (22) à une pression utile (pN),
- un élément de fermeture (28) pour fermer ou ouvrir le système de conduites en coopérant avec le siège de soupape (26), l'élément de fermeture (28) libérant une section d'étranglement (A) entre le siège de soupape (26) et l'élément de fermeture (28),
- un élément de rappel (32) qui applique une force de rappel sur l'élément de fermeture (28) pour pousser l'élément de fermeture (28) contre le siège de soupape (26) pour fermer le système de conduites,
- une chambre de pression (46) dans laquelle le fluide est à une pression de fermeture (pS) par laquelle le fluide exerce une force de fermeture sur l'élément de fermeture (28) pour fermer le système de conduites (18) et,
- la soupape (10) comporte des moyens (52) pour abaisser la pression de fermeture (pS) dans la chambre de pression (46) en fonction de la section d'étranglement (A) libérée, en dessous de la pression d'alimentation (pV),
- les moyens (52) comprenant un canal (44) traversant l'élément de fermeture (28) et débouchant dans la conduite d'entrée (20), ce canal communiquant avec la chambre de pression (46), le canal (42) débouchant dans la zone de la section d'étranglement dans la conduite d'entrée (20),
soupape **caractérisée en ce que**
les moyens (52) comprennent un élément insert (54) qui forme au moins avec l'élément de fermeture (28).une partie du canal (42) dans la zone de la section d'étranglement (A)

2. Soupape selon la revendication 1,
**caractérisée en ce que**
la soupape (10) comporte un bypass (50) qui comprend un intervalle annulaire (48) entourant l'élément de fermeture (28) et débouchant dans la conduite de sortie (22).

3. Soupape selon l'une des revendications précédentes,
**caractérisée en ce que**
l'élément de fermeture (28) a un évidement cylindrique (56) logeant l'élément insert (54).

4. Soupape selon la revendication 3,
**caractérisée en ce que**
l'élément insert (54) a une section en forme de U ayant une première branche (60) pratiquement perpendiculaire à l'axe longitudinal (L) et une seconde branche (62) pratiquement parallèle à l'axe longitudinal (L).

5. Soupape selon l'une des revendications précédentes,
**caractérisée en ce que**
l'élément insert (54) une première surface frontale (63) tournée vers l'élément de fermeture (28) et qui comporte un certain nombre de creux (64).

6. Soupape selon la revendication 4,
**caractérisée en ce que**
l'élément insert (54) forme une seconde surface frontale (65) à l'extrémité libre de la seconde branche (62), cette surface ayant un chanfrein (66) par rapport à l'axe longitudinal (L).

7. Soupape selon l'une des revendications précédentes,
**caractérisée en ce que**
l'élément insert (54) est mobile par rapport à l'élément de fermeture (28).

8. Soupape selon la revendication 7,
**caractérisée en ce que**
l'élément insert (54) est fixé à l'élément de fermeture (28) par un certain nombre de ressorts (58).

9. Soupape selon l'une des revendications précédentes,
**caractérisée en ce que**
la soupape (10) comporte une installation d'entraînement (36) pour déplacer l'élément de fermeture (28) selon l'axe longitudinal (L).

10. Soupape selon l'une des revendications précédentes,
**caractérisée en ce que**
l'élément de rappel (32) est sous la forme d'un aimant permanent (34).

11. Véhicule comportant une soupape (10) selon l'une des revendications précédentes.

12. Procédé de gestion d'une soupape pour fermer ou ouvrir un système de conduites, la soupape comprenant :
- un corps de soupapes (24) en métal ou en matière plastique formant un siège de soupape (26),
- un système de conduites (18) avec une conduite d'entrée (20) pour fournir un fluide à un siège de soupape (26) et une conduite de sortie (22) pour évacuer le fluide du siège de soupape (26), le fluide étant à une pression d'alimentation (pV) dans la conduite d'entrée (20) et à une pression utile (pN) dans la conduite de sortie (22),
- un élément de fermeture (28) coopérant avec le siège de soupape (26) pour fermer ou pour ouvrir le système de conduites,
- un élément de rappel (32) qui applique une force de rappel sur l'élément de fermeture (28) pour pousser l'élément de fermeture (28) contre le siège de soupape (26) et fermer le système de conduites et,
- une chambre de pression (46) dans laquelle le fluide est à une pression de fermeture (pS) par laquelle le fluide exerce une force de fermeture sur l'élément de fermeture (28) pour fermer le système de conduites (18),
procédé comprenant les étapes suivantes consistant à :
- libérer la section d'étranglement (A) entre le siège de soupape (26) et l'élément de fermeture (28) lorsque la pression d'alimentation (pV) dépasse un seuil prédéfini et,
- abaisser la pression de fermeture (pS) dans la chambre de pression en dessous de la pression d'alimentation (pV) avec des moyens (52) de forme appropriée qui comprennent un canal (44) traversant l'élément de fermeture (28) et débouchant dans la conduite d'alimentation (20), ce canal communiquant avec la chambre de pression (46),
le canal (44) débouchant dans la conduite d'alimentation (20) dans la zone de la section d'étranglement (A) et les moyens (52) comprenant un élément insert (54) qui forme avec l'élément de fermeture (28), au moins une partie du canal (44) dans la zone de la section d'étranglement (A).
